# EUROPÄISCHE PATENTANMELDUNG

(11) **EP 4 494 755 A1**
(43) Veröffentlichungstag der Anmeldung: **22.01.2025**
(21) Anmeldenummer: 24174458.0
(22) Anmeldetag: 07.05.2024
(51) Int. Cl.: B01F 27/172, A01K 5/00, B01F 27/922, B01F 33/502, B02C 18/18

(54) **SCHNEIDMESSER FÜR MISCHSCHNECKEN EINES FUTTERMISCHERS**

(30) Priorität: 19.07.2023 DE 202023104037 U
(71) Anmelder: Trioliet B.V., 7575 BW Oldenzaal (NL)
(72) Erfinder: Liet, Robert, 7573 CS Oldenzaal (NL)
(74) Vertreter: Grünecker Patent- und Rechtsanwälte PartG mbB

(57) **Zusammenfassung**

Futtermischer zum Zerkleinern und Mischen von Futter, insbesondere faserförmigem Pflanzenmaterial, umfassend einen Mischbehälter zur Aufnahme von Futter, wobei der Mischbehälter einen Boden und eine sich vom Boden nach oben erstreckende Wandung aufweist, wobei der Mischbehälter eine im Mischbehälter drehbar angeordnete Mischschnecke umfasst, wobei die Mischschnecke wenigstens ein Schneidmesser (19) umfasst, wobei das wenigstens eine Schneidmesser eine Mehrzahl von Segmenten (20) umfasst, wobei die Mehrzahl von Segmenten jeweils eine Schneide (21) umfassen, und wobei die Segmente durch Aussparungen (22) voneinander beabstandet sind.

## Beschreibung

Die Erfindung bezieht auf einen Futtermischer zum Zerkleinern und Mischen von Futter, insbesondere faserförmigen Pflanzenmaterial, gemäß Oberbegriff des Anspruchs 1.

Futtermischer finden in der Landwirtschaft zunehmend Verbreitung und umfassen einen Mischbehälter, in dem wenigstens ein Mischwerkzeug bewegt wird, um Futter zu mischen. Der Mischbehälter weist üblicherweise einen Boden und eine sich im Wesentlichen konisch erweiternde Vorderwand und Rückwand sowie meist abgeflachte Seitenwände auf. Des Weiteren ist der Mischbehälter an seiner nach oben weisenden Seite häufig offen, so dass er durch diese Öffnung beladen werden kann. Das Mischwerkzeug ist üblicherweise als Mischschnecke ausgebildet, die sich nach oben hin verjüngt und um eine vertikale Achse derart angetrieben wird, dass das eingefüllte Futter nach oben gefördert wird und wieder zurück auf den Boden des Mischbehälters fließt, wo es wieder dem Mischwerkzeug zugeführt wird. Auf diese Weise wird das Futter durchmischt und aufgelockert. Ein derartiger Futtermischer ist beispielsweise aus der EP 1 527 678 A1 bekannt.

Ein weiterer Futtermischer ist beispielsweise aus der EP 1 417 999 bekannt. Diese Druckschrift beschreibt eine Mischschnecke mit Schneidmessern, die über den Rand der Mischschnecke vorstehen. Die Schneidmesser liegen in einer im Wesentlichen horizontalen Ebene und werden jeweils über eine radiale Haltekonstruktion von der Drehachse der Mischschnecke gehalten. Im Betrieb kann Futter mit den Schneidmessern zerkleinert werden.

Die US 5,456,416 und die EP 1 634 494 B1 beschreiben weitere Futtermischer bei denen eine Vielzahl von Schneidmessern an einem Schneckenblatt befestigt sind und über den Rand des Schneckenblattes nach außen vorstehen.

Die Nutzungsdauer von Schneidmessern ist jedoch zuweilen nicht zufriedenstellend, da sich die Schneiden des Schneidmessers, insbesondere bei profilierten Schneiden, etwa gewellten oder gezackten Schneiden, im Betrieb schnell abnutzen können.

Aufgabe der Erfindung ist es daher, einen Futtermischer bereitzustellen, bei dem die Schneidmesser länger nutzbar bleiben.

Diese Aufgabe wird durch einen Futtermischer gemäß Anspruch 1 gelöst. Weiterbildungen befinden sich in den Unteransprüchen.

Die Erfindung stellt also einen Futtermischer zum Zerkleinern und Mischen von Futter, insbesondere faserförmigen Pflanzenmaterial, umfassend einen Mischbehälter zur Aufnahme von Futter bereit, wobei der Mischbehälter einen Boden und eine sich vom Boden nach oben erstreckende Wandung aufweist, wobei der Mischbehälter eine im Mischbehälter drehbar angeordnete Mischschnecke umfasst, wobei die Mischschnecke wenigstens ein Schneidmesser umfasst, wobei das wenigstens eine Schneidmesser eine Mehrzahl von Segmenten umfasst, wobei die Mehrzahl von Segmenten jeweils eine Schneide umfassen, und wobei die Segmente durch Aussparungen voneinander beabstandet sind.

Es hat sich gezeigt, dass bei einem solchen Futtermischer die Schneide des wenigstens einen Schneidmessers bzw. die Schneiden der Mehrzahl von Segmenten länger intakt bleiben. Auch hat sich gezeigt, dass sich weniger Futter entlang der Schneide bewegt, da das Futter durch die Aussparungen abgebremst wird. Dadurch werden die Schneiden der Mehrzahl von Segmenten weniger abgenutzt. Zudem hat sich gezeigt, dass das wenigstens eine Schneidmesser eines solchen Futtermischers flexibler ist.

Das Schneidmesser kann insbesondere zwei oder mehr Segmente umfassen.

Im Folgenden kann unter der Breite einer Aussparung insbesondere der Abstand zwischen benachbarten, durch die Aussparung getrennten, Segmenten verstanden werden. Unter der Tiefe einer Aussparung kann insbesondere die Ausdehnung der Aussparung senkrecht zur Breite der Aussparung verstanden werden.

Unter dem Messerblatt des wenigstens einen Schneidmessers kann insbesondere ein Grundkörper verstanden werden, an dem die Mehrzahl von Segmenten ausgebildet sind. Auch kann das Messerblatt ein oder mehrere, insbesondere zwei, Montagelöcher aufweisen, um das wenigstens eine Schneidmesser, beispielsweise mit Schrauben, Nieten oder Bolzen, an die Mischschnecke, insbesondere an das Schneckenblatt der Mischschnecke, montieren zu können.

Das Schneidmesser kann also insbesondere zerstörungsfrei lösbar mit der Mischschnecke verbunden sein.

Im Fall von zwei Montagelöchern kann zwischen den Montagelöchern eine Vertiefung auf der bei Montage dem Schneckenblatt zugewandten Seite des Schneidmessers angeordnet sein.

Durch diese Vertiefung kann eine Verformung des Bereichs, in dem die Montagelöcher angeordnet sind, im Zuge der Montage des Schneidmessers wenigstens teilweise kompensiert werden. Ohne eine solche Vertiefung kann sich der Montagebereich des Schneidmessers verformen, wenn dieses mit dem Schneckenblatt verbunden, insbesondere verschraubt wird. Solche Verformungen können sich wiederum negativ auf die Stabilität und damit Lebensdauer des Schneidmessers auswirken. Bei der Vertiefung kann es sich auch um einen Teil eines gewölbten Bereichs zwischen den Montagelöchern handeln, wobei die Wölbung des gewölbten Bereichs im montierten Zustand vom Schneckenblatt weg weist.

Es können auch mehr als eine, beispielsweise zwei, Mischschnecken in dem Mischbehälter angeordnet sein. Jede der Mischschnecken kann dann wenigstens ein hierin beschriebenes Schneidmesser umfassen. Wenn hierin also Merkmale einer Mischschnecke beschrieben werden können die ein oder mehreren weiteren Mischschnecken entsprechende Merkmale aufweisen.

Die Drehachse der Mischschnecke kann vertikal im Mischbehälter angeordnet sein, d.h. senkrecht zum Boden des Mischbehälters verlaufen.

Die Mischschnecke kann auch mehr als ein, beispielsweise drei oder fünf, Schneidmesser umfassen. Dabei können die Schneidmesser unterschiedlich oder gleich ausgebildet sein. Insbesondere kann nur ein Teil der Schneidmesser erfindungsgemäß ausgebildet sein. Beispielsweise können an der Mischschnecke fünf Schneidmesser montiert sein, wobei nur die obersten zwei der fünf montierten Schneidmesser erfindungsgemäß ausgebildet sind. Dadurch kann in Bereichen mit erwartet hohem Verschleiß das erfindungsgemäße Schneidmesser eingesetzt werden, während in anderen Bereichen mit erwartet niedrigerem Verschleiß einfachere Schneidmesser verwendet werden.

Bei mehr als einer Mischschnecke, beispielsweise zwei oder drei Mischschnecken, können die Schneidmesser der Mischschnecken gleich oder unterschiedlich ausgebildet sein. Beispielsweise kann wenigstens ein Schneidmesser einer Mischschnecke länger ausgebildet sein als die Schneidmesser der übrigen Mischschnecken und/oder derart geformt sein, dass das wenigstens eine Schneidmesser beim Mischen dem Futter mehr Widerstand bietet als die Schneidmesser der übrigen Mischschnecken. Dadurch kann die Austragung von Futter, beispielsweise über eine Austragsöffnung im Mischbehälter verbessert werden. Beispielsweise können drei Mischschnecken in einem Mischbehälter in Fahrtrichtung hintereinander angeordnet sein, wobei das wenigstens eine Schneidmesser der Mischschnecke, die einer Austragsöffnung am nächsten liegt, länger ausgebildet ist oder beim Mischen von Futter mehr Widerstand aufweist. Dabei kann die Austragsöffnung der in Fahrtrichtung vorderen oder mittleren Mischschnecke am nächsten sein. Auch ist denkbar, dass wenigstens ein Schneidmesser der in Fahrtrichtung hintersten Mischschnecke länger ausgebildet ist oder beim Mischen von Futter mehr Widerstand aufweist. Dadurch kann die Förderung von Futter von der hintersten Mischschnecke zur vordersten Mischschnecke verstärkt werden und somit, beispielsweise für im Bereich der hintersten Mischschnecke beladenen Futtermischer, beispielsweise bei entsprechenden selbstladenden Futtermischern, die Durchmischung verbessert werden.

Auch kann, beispielsweise bei drei Mischschnecken, wenigstens ein Schneidmesser einer mittleren Mischschnecke derart ausgebildet sein, dass eine bessere Zirkulation von Futter im Mischbehälter stattfindet. Dadurch kann die Durchmischung von Futter verbessert werden.

Eine Aussparung kann insbesondere eine Nut, eine Einkerbung, ein Ausschnitt, eine Einbuchtung oder eine Vertiefung sein. Unter einer Aussparung kann insbesondere ein Raum verstanden werden, der bei der Herstellung des Bauteils freigelassen wird oder nachträglich entfernt wird. Die Aussparungen können beispielsweise mit einem Laserschneider, beispielsweise einem 3D-Laserschneidkopf, aus dem wenigstens einen Schneidmesser ausgeschnitten worden sein oder mit einer Fräsmaschine aus dem wenigstens einen Schneidmesser ausgetragen worden sein. Die Aussparung kann insbesondere U-förmig ausgebildet sein.

Die Mehrzahl von Segmenten können unterschiedlich ausgebildet sein. Insbesondere können die Mehrzahl von Segmenten unterschiedlich breit ausgebildet sein.

Die Schneiden der Mehrzahl von Segmenten können ein Profil aufweisen, d.h. insbesondere, dass die Schneiden nicht gerade oder glatt verlaufen müssen. Die Schneiden der Mehrzahl von Segmenten können beispielsweise gewellt, geriffelt, gezackt, gezahnt und/oder zickzackförmig ausgebildet sein.

Die Schneiden der Mehrzahl von Segmenten und/oder die Mehrzahl von Segmenten können in einer Ebene liegen. Diese Ebene kann als Schnittebene bezeichnet werden. Mit anderen Worten kann das Schneidmesser also so ausgebildet sein, dass die Mehrzahl von Segmenten nicht gegeneinander angewinkelt sind. Die Schnittebene des Schneidmessers kann im Wesentlichen senkrecht zur Drehachse der Mischschnecke liegen.

Im Falle von profilierten Schneiden kann die Schnittebene des Schneidmessers derjenigen Ebene entsprechen, in der die Schneiden zu gleichen Teilen über bzw. unter der Ebene liegen. Beispielsweise kann bei einer gewellten Schneide im Vergleich zu einer geraden Schneide aufgrund der Wellenform die Schneide teilweise über bzw. teilweise unter der Schnittebene liegen.

Die Schneiden der Mehrzahl von Segmenten können in Rotationsrichtung der Mischschnecke weisen. Insbesondere ist denkbar, dass die Schneiden der Mehrzahl von Segmenten quer, also in einem rechten Winkel, oder unter einem Winkel ungleich 90° zur Drehrichtung der Mischschnecke und/oder zur Kreisbahn um die Drehachse der Mischschnecke angeordnet sind.

Die Ober- und/oder die Unterseite des Messerblatts des wenigstens einen Schneidmessers kann eben sein. Es ist auch denkbar, dass das Messerblatt des wenigstens einen Schneidmessers an der Ober- und/oder Unterseite Versteifungen aufweist. Unter Versteifungen sind insbesondere Modifikationen zu verstehen, mit denen die Steifigkeit eines Bauteils durch Modifikation von Gestalt und/oder Werkstoff und/oder mit Versteifungselementen erhöht werden kann, z.B. durch Streben, Einpressungen und/oder Verformungen.

Auch ist denkbar, dass das Messerblatt des wenigstens einen Schneidmesser derart geformt ist, dass das wenigstens eine Schneidmesser an die Mischschnecke, insbesondere an das Schneckenblatt der Mischschnecke, derart montierbar ist, dass die Schnittebene der Mehrzahl von Segmenten im Wesentlichen senkrecht zur Drehachse der Mischschnecke liegt. Dadurch kann erreicht werden, dass das wenigstens eine Schneidmesser horizontal im Futtermischer, also parallel zum Boden des Mischbehälters bewegt werden kann. Insbesondere im Vergleich zu einer Montierung bei der das wenigstens eine Schneidmesser eine Verlängerung der Mischschnecke nach außen bildet und somit die Schnittebene der Mehrzahl von Segmenten einen Winkel zur Horizontalen aufweist, ist das wenigstens eine Schneidmesser bei horizontaler Schnittebene weniger bestrebt beim Mischen von Futter das Futter in einen Bereich nach oben zu drücken, in dem das Futter normalerweise nach unten fällt. Somit wird die Mischbewegung im Mischbehälter weniger gestört.

Die Aussparungen können gleich oder unterschiedlich ausgebildet sein. Die Aussparungen können unterschiedlich tief und/oder breit ausgebildet sein. Die Aussparungen können beispielsweise zwischen 20 - 30 mm tief und 6 - 8 mm breit ausgebildet sein. Die Breite und/oder Tiefe der Aussparungen können mit steigendem Abstand zur Drehachse der Mischschnecke zunehmen oder abnehmen. Die Breite der Aussparungen kann kürzer sein als die Breite der angrenzenden Segmente, insbesondere kürzer als die halbe Breite, insbesondere kürzer als ein Viertel der Breite der angrenzenden Segmente. Die Tiefe der Aussparungen kann länger sein als die Breite der angrenzenden Segmente, insbesondere länger als die halbe Breite, insbesondere länger als ein Viertel der Breite der angrenzenden Segmente. Die Aussparungen können parallel zueinander angeordnet sein. Mit anderen Worten können sich die Aussparungen in Tiefenrichtung entlang zueinander versetzten parallelen Linien erstrecken. Es ist auch denkbar, dass sich die Aussparungen in Tiefenrichtung entlang zueinander versetzten Linien erstrecken, die sich unter einem Winkel, insbesondere einem spitzen Winkel, schneiden, d.h. mit anderen Worten, nicht parallel zueinander liegen.

Die Aussparungen können also in unterschiedlichen Winkeln zueinander und/oder zur Drehrichtung der Mischschnecke angeordnet sein oder verlaufen.

Auch ist denkbar, dass die Breite der Aussparungen in Tiefenrichtung variiert. Insbesondere kann die Breite am tiefsten Punkt der Aussparung kleiner sein als am obersten Punkt der Aussparung, beispielsweise kann die Aussparung V-förmig ausgebildet sein.

Die Aussparungen können so ausgebildet sein, dass bei Drehung der Mischschnecke möglichst viel bzw. möglichst wenig Futter in die Aussparungen gelangt. Beispielsweise können sich die Aussparungen im Wesentlichen in Drehrichtung der Mischschnecke oder entlang einer Kreisbahn um die Drehachse der Mischschnecke oder in einem Winkel von -30° bis +40° zur Drehrichtung der Mischschnecke oder zu einer Kreisbahn um die Drehachse der Mischschnecke erstrecken. Dadurch kann im Betrieb der Mischschnecke möglichst leicht Futter in die Aussparungen gelangen und sich dort ansammeln. Zudem kann dadurch, insbesondere bei Ausführungsformen bei denen jede Aussparung zumindest eine Kante umfasst, die Schnittlänge entlang derer Futter zerkleinert werden kann, verlängert werden.

Alternativ ist denkbar, dass sich die Aussparungen im Wesentlichen quer oder in einem Winkel von 50° bis 80° zur Drehrichtung der Mischschnecke oder zu einer Kreisbahn um die Drehachse der Mischschnecke erstrecken. Dadurch kann es dem Futter erschwert werden im Betrieb der Mischschnecke in die Aussparungen zu gelangen und sich anzusammeln.

Dabei kann der Winkel unter dem die Aussparung zur Drehrichtung und/oder zur Kreisbahn angeordnet ist, insbesondere dem Winkel entsprechen, welchen die Aussparung gegenüber einer Anordnung entlang der Drehrichtung oder Kreisbahn einschließt.

Ein positiver Winkel kann dabei einen Winkel ausgehend von der Kreisbahn gegen den Uhrzeigersinn und ein negativer Winkel entsprechend einen Winkel ausgehend von der Kreisbahn im Uhrzeigersinn bezeichnen.

Jede Aussparung kann zumindest eine Kante umfassen. Dadurch kann sich das Futter über die Kante falten und gebrochen oder auch geschnitten werden. Dabei kann sich die zumindest eine Kante entlang der Tiefenrichtung und/oder entlang der Breite der Aussparung erstrecken. Die zumindest eine Kante kann gratig, scharfkantig oder geriffelt sein. Dadurch kann das Futter möglichst effektiv gebrochen oder geschnitten werden. "Gratig" kann insbesondere bedeuten, dass die zumindest eine Kante nicht entgratet wurde. Ein Grat kann insbesondere eine beim Bearbeitungs- oder Herstellungsvorgang entstandene Kante, Auffaserung oder Splitter sein.

Die Schneiden der Mehrzahl von Segmenten können gehärtet sein, insbesondere stärker gehärtet als der restliche Teil des wenigstens einen Schneidmessers. Dadurch kann die Festigkeit der Schneiden der Mehrzahl von Segmenten verbessert werden. Unter "härten" kann insbesondere ein Prozess verstanden werden, bei dem die Mikrostruktur, auch Gefüge genannt, eines Bereichs geändert wird, um dessen mechanische Widerstandsfähigkeit zu erhöhen. Die gehärteten Bereiche sind typischerweise fester, aber auch spröder und damit bruchanfälliger. Da durch die Aussparungen die Segmente voneinander beabstandet sind, können insbesondere auch die gehärteten Schneiden der Mehrzahl von Segmenten voneinander beabstandet sein. Dadurch ergibt sich als synergistischer Effekt, dass die Schneiden der Mehrzahl von Segmenten besonders fest sind, das Schneidmesser insgesamt aber flexibel bleibt. Auch hat sich gezeigt, dass dadurch Spannungen zwischen dem gehärteten Bereich bzw. stärker gehärteten Bereich und dem ungehärteten Bereich bzw. weniger gehärteten Bereich des Schneidmessers reduziert werden können.

Auch können die Mehrzahl von Segmenten gehärtet sein, insbesondere stärker gehärtet als der restliche Teil des wenigstens einen Schneidmessers. Mit anderen Worten können also nicht nur die Schneiden, sondern die Segmente als Ganzes gehärtet sein. Dadurch kann die Festigkeit der Mehrzahl von Segmenten verbessert werden. Da durch die Aussparungen die Segmente voneinander beabstandet sind, ergibt sich als synergistischer Effekt, dass die Mehrzahl von Segmenten besonders fest sind, das Schneidmesser aber insgesamt flexibel bleibt. Auch hat sich gezeigt, dass dadurch Spannungen zwischen dem gehärteten Bereich bzw. stärker gehärteten Bereich und dem ungehärteten Bereich bzw. weniger gehärteten Bereich reduziert werden können.

Dabei kann sich jede Aussparung in den Übergangsbereich zwischen dem ungehärteten Bereich bzw. weniger gehärteten Bereich und dem gehärteten Bereich bzw. stärker gehärteten Bereich des wenigstens einen Schneidmessers erstrecken. Auch können sich die Aussparungen in den ungehärteten Bereich bzw. weniger gehärteten Bereich des wenigstens einen Schneidmessers erstrecken. Dadurch kann die Flexibilität des Schneidmessers weiter verbessert werden.

Die Schneiden der Mehrzahl von Segmenten können nachschleifbar sein. Mit anderen Worten können die Segmente im Bereich der Schneiden eine Dicke von 4 - 12 mm, insbesondere 6 - 10 mm, aufweisen, welche ein Nachschleifen der Schneiden erlaubt. Dadurch kann sich die Nutzungsdauer des wenigstens einen Schneidmessers kostengünstig verlängern lassen.

Die Schneiden der Mehrzahl von Segmenten können sich entlang einer Linie oder entlang von zueinander versetzten parallelen Linien erstrecken. Dies ermöglicht eine effizientere Herstellung des wenigstens einen Schneidmessers.

Jede Schneide der Mehrzahl von Segmenten kann eine, insbesondere zwei oder mehr als zwei Zacken, umfassen. Mit anderen Worten können die Schneiden der Mehrzahl von Segmenten gezackt sein. Dadurch kann Futter besser zerkleinert werden.

Der Futtermischer kann ein stationärer Mischer, ein Futtermischwagen oder ein Futterroboter sein.

Die Erfindung stellt außerdem ein Schneidmesser bereit, welches eines oder mehrere der oben genannten Merkmale aufweist.

Weitere Merkmale und Vorteile der Erfindung werden nachfolgend anhand der beispielhaften Figuren beschrieben. Dabei zeigt:
- Fig. 1: einen beispielhaften Futtermischer in schematischer Darstellung in perspektivischer Draufsicht,
- Fig. 2: eine schematische, geschnittene Darstellung eines weiteren beispielhaften Mischbehälters eines Futtermischers in Seitenansicht,
- Fig. 3: eine perspektivische Draufsicht eines beispielhaften Schneidmessers in schematischer Darstellung,
- Fig. 4: eine Draufsicht eines weiteren beispielhaften Schneidmessers in schematischer Darstellung,
- Fig. 5: eine Draufsicht eines weiteren beispielhaften Schneidmessers in schematischer Darstellung,
- Fig. 6: eine Draufsicht eines weiteren beispielhaften Schneidmessers in schematischer Darstellung, und
- Fig. 7: eine Draufsicht eines weiteren beispielhaften Schneidmessers in schematischer Darstellung.

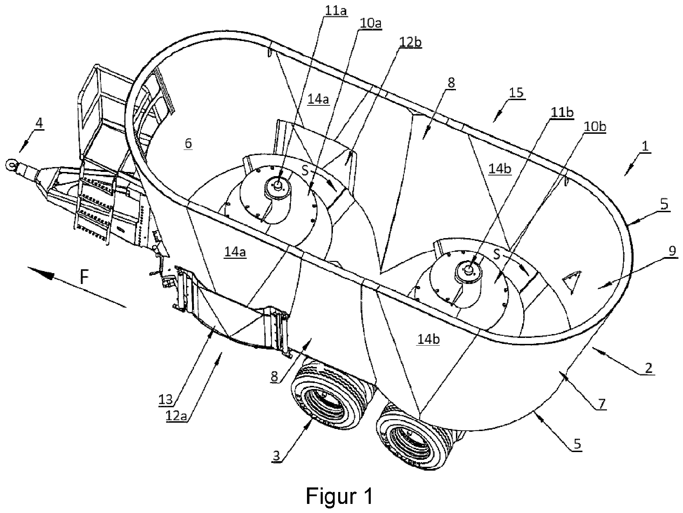

Figur 1 zeigt in schematischer Darstellung in perspektivischer Draufsicht einen Futtermischer 1, der als Futtermischwagen ausgebildet ist. Der Futtermischer 1 umfasst einen oben offenen Mischbehälter 2 zur Aufnahme von Futter, der auf einem Fahrgestell 3 befestigt ist und mit Hilfe eines Zugfahrzeuges, wie beispielsweise eines Schleppers, in Fahrtrichtung F mittels der Zugdeichsel 4, z.B. in einer Stallgasse, verfahrbar ist. Der Mischbehälter 2 weist einen Boden 5, eine Vorderwand 6, eine Rückwand 7 und Seitenwände 8 auf. Vorderwand 6, Rückwand 7 und Seitenwände 8 bilden zusammen die Wandung des Mischbehälters 2. Über die obere Behälteröffnung 9 kann Futter in den Mischbehälter 2 eingebracht werden. Bei dem zu mischenden Futter kann es sich insbesondere um langfaseriges Futter, wie beispielsweise mit einem Ladewagen aufgenommene Silage oder Heu, handeln.

Im Inneren des Mischbehälters 2 sind zwei in Fahrrichtung F hintereinanderliegend angeordnete Mischschnecken 10a bzw. 10b vorgesehen. Die Mischschnecken 10a und 10b rotieren im Betrieb des Futtermischers 1 jeweils drehend um eine vertikale Achse 11a, 11b, die senkrecht zum Boden 5 verläuft. Mit anderen Worten sind die Mischschnecken 10a und 10b also als Vertikalschneckenförderer, kurz Vertikalschnecken, ausgebildet. Die Drehrichtung der beiden Mischschnecken 10a, 10b ist hier gleichsinnig und erfolgt hier im Uhrzeigersinn in Richtung des Pfeiles S.

Neben der in Fahrtrichtung F vorderen Mischschnecke 10a, befinden sich zwei seitliche Austragsöffnungen 12a und 12b, die in Höhe der vertikalen Achse 11a und beidseitig der vertikalen Achse 11a diametral gegenüberliegend, angeordnet sind. Die beiden Austragsöffnungen 12a und 12b durchbrechen die Seitenwände 8 des Mischbehälters 2 und sind jeweils durch einen Schieber 13 verschließbar.

Im Betrieb des Futtermischers 1 wird das Futter über die Behälteröffnung 9 in den Mischbehälter 2 eingebracht. Durch die gleichsinnige Drehung der beiden Mischschnecken wird das Futter beim Mischen nach oben transportiert und fließt am oberen Ende der Mischschnecke wieder nach unten. Futter, das beim Ausdosieren oder Austragen eine der beiden geöffneten Austragsöffnungen 12a, 12b erreicht, wird durch diese kontinuierlich ausgegeben.

Die Vorderwand 6 und die Rückwand 7 erstrecken sich schräg nach oben außen, so dass die Behälteröffnung 9 größer ist als der Umriss des Bodens 5. Der Neigungswinkel der Seitenwände 8 ist in Verlängerung einer Verbindungslinie zwischen den Drehachsen 11a, 11b, die parallel zur Fahrtrichtung F verläuft, am größten und verringert sich mit zunehmendem Abstand von dieser Verbindungslinie, bis zu einer dreieckigen, seitlich platzierten Abflachung 14a, 14b, die eben ist, mit ihrer Spitze den Boden 5 berührt und sich im Wesentlichen senkrecht zum Boden 5 erstreckt. Durch die Abflachung 15 wird die Breite des Mischbehälters 2 quer zur Fahrtrichtung F so weit verringert, dass auch enge Stallgassen durchfahren werden können.

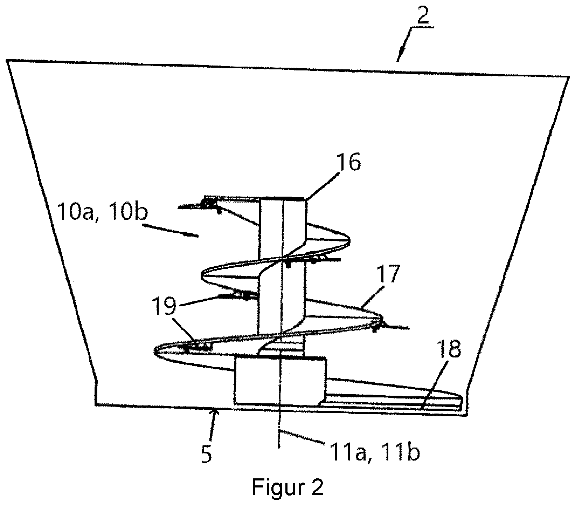

Fig. 2 zeigt in schematischer, geschnittener Seitenansicht einen weiteren beispielhaften Mischbehälter 2 eines Futtermischers 1. In dem Mischbehälter 2 ist eine Mischschnecke 10a, 10b angeordnet, die einen rohrartigen Schneckenturm 16 aufweist, an dem ein sich nach oben windendes Schneckenblatt 17 befestigt ist.

Das Schneckenblatt 17 beginnt im unteren Bereich des Mischbehälters 2, in der Nähe von dessen Boden 5, mit einer Aufnahmekante 18, die das Futter bei der Drehung der Mischschnecke 10a, 10b um die vertikale Achse 11a, 11b vom Boden 5 des Mischbehälters 2 laufend aufnimmt, so dass das neu aufgenommene Futter das bereits aufgenommene Mischgut immer weiter über das Schneckenblatt 17 nach oben transportiert. Spätestens am oberen Ende des Schneckenblattes 17 fällt das Futter wieder nach unten und bildet um die Mischschnecke 10a, 10b eine Art Hülle, die mithilft, das Futter auf dem Schneckenblatt 17 zu halten.

Um die vertikale Achse 11a, 11b herum verteilt sind eine Mehrzahl von beispielhaften Schneidmessern 19 vorgesehen, die an dem Schneckenblatt 17 montiert sind. Die Schneidmesser 19 durchschneiden insbesondere das nach unten fließende Futter, sodass dieses zerkleinert wird.

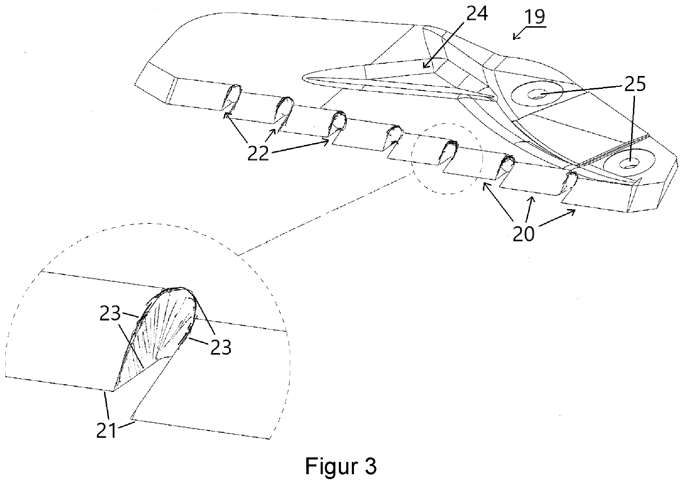

Figur 3 zeigt eine perspektivische Ansicht eines beispielhaften Schneidmessers 19 mit einer Mehrzahl von Segmenten 20. Die Mehrzahl von Segmenten 20 umfassen jeweils eine Schneide 21. Die Mehrzahl von Segmenten 20, insbesondere deren Schneiden 21, liegen in einer Ebene. Mit anderen Worten sind die Segmente nicht gegeneinander angewinkelt. Die Mehrzahl von Segmenten 20 sind jeweils durch Aussparungen 22 voneinander beabstandet. Die Aussparungen 22 können beispielweise eine Breite von 6 - 8 mm und eine Tiefe von 20 - 30 mm aufweisen. In diesem Ausführungsbeispiel sind die Aussparungen 22 beispielhaft 6 mm breit und 25 mm tief.

Die Aussparungen 22 umfassen jeweils Kanten 23. Dabei sind die Kanten 23 teilweise entlang der Tiefenrichtung und teilweise entlang der Breite der Aussparungen 22 angeordnet. Dabei sind die Kanten 23 in diesem Beispiel gratig ausgebildet. Es ist aber auch denkbar, die Kanten zu entgraten, sodass diese scharfkantig ausgebildet sind.

Die Schneiden 21 der Mehrzahl von Segmenten 20 liegen versetzt auf parallelen Linien zueinander. Die Schneiden 21 können im Betrieb insbesondere in Drehrichtung S der Mischschnecke 10a, 10b weisen.

Das beispielhafte Schneidmesser 19 umfasst außerdem eine Versteifung 24 und zwei Montagelöcher 25, um das Schneidmesser 19 an dem Schneckenblatt 17, beispielsweise mit Bolzen, montieren zu können. Dabei ist das Schneidmesser 19 derart verformt, dass bei einer Montage des Schneidmessers 19 die Schnittebene der Mehrzahl von Segmenten 20 im Wesentlichen senkrecht zur Drehachse der Mischschnecke 10a, 10b, also horizontal, liegt. Zwischen den Montagelöcher 25 ist außerdem eine Vertiefung auf der bei Montage dem Schneckenblatt 17 zugewandten Seite des Schneidmessers 19 angeordnet. Durch diese Vertiefung kann eine Verformung des Bereichs, in dem die Montagelöcher 25 angeordnet sind, im Zuge der Montage des Schneidmessers 19 wenigstens teilweise kompensiert werden. Ohne eine solche Vertiefung kann sich der Montagebereich des Schneidmessers 19 verformen, wenn dieses mit dem Schneckenblatt 17 verschraubt wird. Solche Verformungen können sich wiederum negativ auf die Stabilität und damit Lebensdauer des Schneidmessers 19 auswirken.

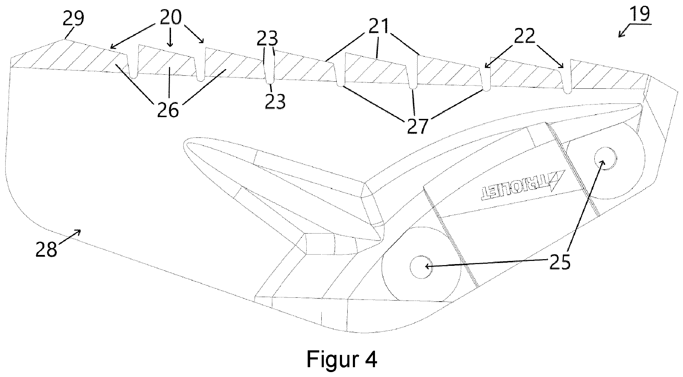

Figur 4 zeigt eine Draufsicht eines weiteren beispielhaften Schneidmessers 19 mit einer Mehrzahl von Segmenten 20. Die Mehrzahl von Segmenten 20 umfassen jeweils eine Schneide 21. Die Mehrzahl von Segmenten 20 sind durch Aussparungen 22 voneinander beabstandet. Die Schneiden 21 der Mehrzahl von Segmenten 20 liegen versetzt auf parallelen Linien zueinander.

Die Mehrzahl von Segmenten 20 sind gehärtet. Die gehärteten Bereiche 26 sind durch schraffierte Flächen angedeutet. Die gehärteten Bereiche 26 sind durch Aussparungen 22 voneinander getrennt. Jede Aussparung 22 reicht im unteren Bereich 27 der jeweiligen Aussparung 22 in den ungehärteten Bereich 28 des wenigstens einen Schneidmessers 19 hinein. Der ungehärtete Bereich 28 kann auch ein Bereich sein, der weniger gehärtet ist als die Mehrzahl von Segmenten 20. Beispielsweise kann das Schneidmesser 19 eine Grundhärte besitzen, d.h., gehärtet sein, und die Mehrzahl von Segmenten 20 bzw. die Bereiche 26 können stärker gehärtet sein als der restliche Teil des wenigstens einen Schneidmessers 19.

Die Schneide 21 des ersten Segments 20 umfasst in diesem Beispiel eine Zacke 29. Es ist auch denkbar, dass die Schneiden 21 mehrerer oder aller Segmente 20 eine oder mehrere Zacken 29 aufweisen, also gezackt ausgebildet sind.

Das Schneidmesser 19 umfasst außerdem zwei Montagelöcher 25, um das Schneidmesser 19 an dem Schneckenblatt 17, beispielsweise mit Bolzen, montieren zu können. Zwischen den Montagelöchern 25 kann wiederum eine oben beschriebene Vertiefung vorgesehen sein.

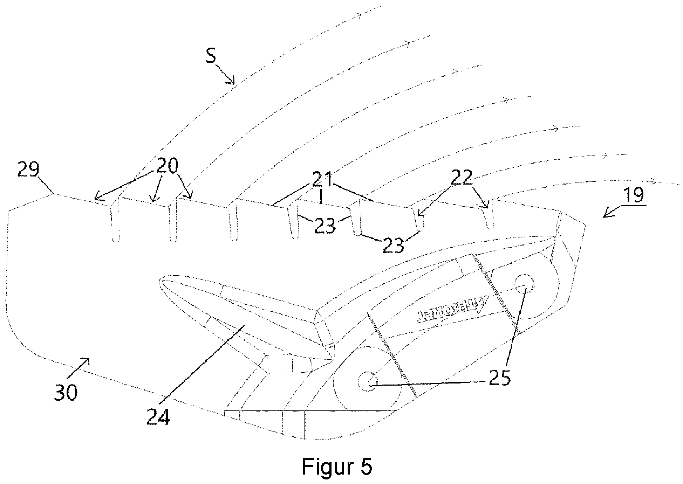

Figur 5 zeigt eine Draufsicht eines weiteren beispielhaften Schneidmessers 19 mit einer Mehrzahl von Segmenten 20, Schneiden 21, Aussparungen 22, Kanten 23, Versteifung 24, Montagelöcher 25 und Zacke 29. Dabei sind die Aussparungen 22 unterschiedlich tief ausgebildet. Die Tiefe der Aussparungen 22 nimmt mit steigendem Abstand zur Drehachse zu. Die Aussparungen 22 sind U-förmig ausgebildet. Über die Montagelöcher 25 ist das Schneidmesser 19 an eine drehbar angeordnete Mischschnecke 10a, 10b montierbar. Die gestrichelten Pfeile S zeigen die Drehrichtung S der Mischschnecke 10a, 10b bzw. Kreisbahnen um die Drehachse der Mischschnecke 10a, 10b an. Die Aussparungen 22 verlaufen in einem Winkel von 50° - 80° zur jeweiligen Kreisbahn. Der Winkel gibt dabei an, um welchen Betrag die jeweilige Aussparung 22 aus der Drehrichtung gedreht wurde und wird daher ausgehend von der Kreisbahn S gemessen. Ein positiver Winkel gibt dabei eine Drehung gegen den Uhrzeigersinn an, ein negativer Winkel entsprechend eine Abweichung im Uhrzeigersinn.

Das Schneidmesser 19 umfasst ein Messerblatt 30 an dem die Mehrzahl von Segmenten 20 ausgebildet sind. Das Messerblatt 30 umfasst die Versteifung 24 und die zwei Montagelöcher 25. Das Messerblatt 30 kann einen gehärteten bzw. stärker gehärteten Bereich und/oder einen ungehärteten bzw. weniger gehärteten Bereich umfassen. In diesem Ausführungsbeispiel ist das Messerblatt 30 ungehärtet.

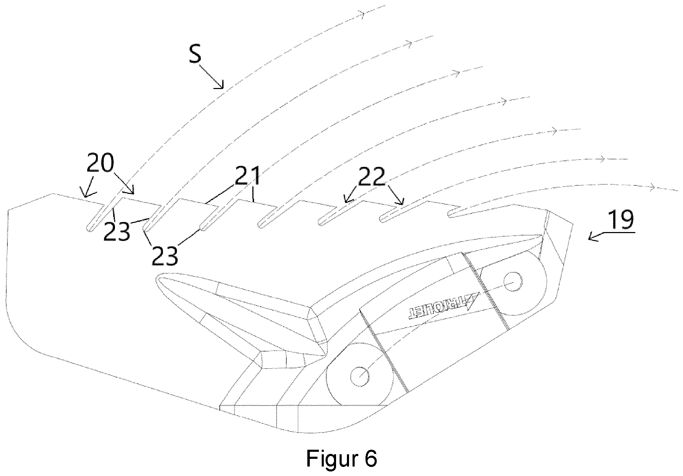

Figur 6 zeigt eine Draufsicht eines weiteren beispielhaften Schneidmessers 19 mit einer Mehrzahl von Segmenten 20, Schneiden 21, Aussparungen 22 und Kanten 23. Dabei sind die Aussparungen 22 unterschiedlich tief ausgebildet. Die Tiefen der Aussparungen 22 nehmen mit steigendem Abstand zur Drehachse zu und erstrecken sich entlang zueinander versetzten, sich schneidenden Linien, also nicht parallel zueinander. Die Aussparungen 22 sind U-förmig ausgebildet. Das Schneidmesser 19 ist an eine drehbar ausgebildete Mischschnecke 10a, 10b montierbar. Die gestrichelten Pfeile S zeigen die Drehrichtung S der Mischschnecke 10a, 10b bzw. Kreisbahnen um die Drehachse der Mischschnecke 10a, 10b an. Die Aussparungen 22 verlaufen hier in unterschiedlichen Winkeln zueinander.

Die Aussparungen 22 sind so ausgebildet, dass bei Drehung der Mischschnecke 10a, 10b möglichst viel Futter in die Aussparungen 22 gelangt. Die Aussparungen 22 erstrecken sich dazu im Wesentlichen in Drehrichtung der Mischschnecke 10a, 10b bzw. entlang von Kreisbahnen um die Drehachse der Mischschnecke 10a, 10b.

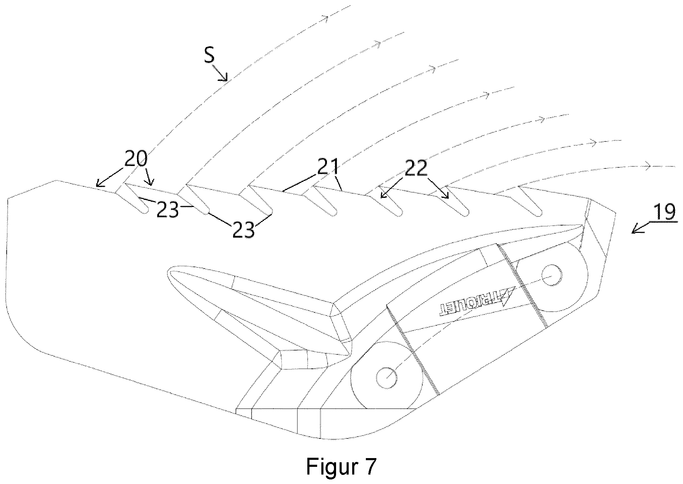

Figur 7 zeigt eine Draufsicht eines weiteren beispielhaften Schneidmessers 19 mit einer Mehrzahl von Segmenten 20, Schneiden 21, Aussparungen 22 und Kanten 23. Dabei ist das Schneidmesser 19 an eine drehbar angeordnete Mischschnecke 10a, 10b montierbar. Die gestrichelten Pfeile S zeigen die Drehrichtung S der Mischschnecke 10a, 10b bzw. Kreisbahnen um die Drehachse der Mischschnecke 10a, 10b an. Die Aussparungen 22 sind U-förmig ausgebildet.

Die Aussparungen 22 sind so ausgebildet, dass bei Drehung der Mischschnecke 10a, 10b möglichst wenig Futter in die Aussparungen 22 gelangt. Die Aussparungen 22 erstrecken sich dazu im Wesentlichen quer zur Drehrichtung der Mischschnecke 10a, 10b, also in einem Winkel von annähernd 90° zur jeweiligen Kreisbahn.

### Bezugszeichenliste

- F: Fahrtrichtung des Futtermischers
- S: Drehrichtung der Mischschnecke
- 1: Futtermischer
- 2: Mischbehälter
- 3: Fahrgestell
- 4: Zugdeichsel
- 5: Boden
- 6: Vorderwand
- 7: Rückwand
- 8: Seitenwände
- 9: Behälteröffnung
- 10a, 10b: Mischschnecke
- 11a, 11b: Vertikale Achse
- 12a, 12b: Austragsöffnung
- 13: Schieber
- 14: Seitlich platzierte Abflachung
- 15: Abflachung
- 16: Schneckenturm
- 17: Schneckenblatt
- 18: Aufnahmekante
- 19: Schneidmesser
- 20: Segment
- 21: Schneide
- 22: Aussparung
- 23: Kante
- 24: Versteifung
- 25: Montagelöcher
- 26: Gehärteter Bereich oder stärker gehärteter Bereich
- 27: Unterer Bereich der Aussparung
- 28: Ungehärteter Bereich oder weniger gehärteter Bereich
- 29: Zacke
- 30: Messerblatt

## Patentansprüche

1. Futtermischer (1) zum Zerkleinern und Mischen von Futter, insbesondere faserförmigem Pflanzenmaterial, umfassend einen Mischbehälter (2) zur Aufnahme von Futter,
wobei der Mischbehälter (2) einen Boden (5) und eine sich vom Boden (5) nach oben erstreckende Wandung aufweist,
wobei der Mischbehälter (2) eine im Mischbehälter (2) drehbar angeordnete Mischschnecke (10a, 10b) umfasst,
wobei die Mischschnecke (10a, 10b) wenigstens ein Schneidmesser (19) umfasst,
wobei das wenigstens eine Schneidmesser (19) eine Mehrzahl von Segmenten (20) umfasst,
wobei die Mehrzahl von Segmenten (20) jeweils eine Schneide (21) umfassen, und
wobei die Segmente (20) durch Aussparungen (22) voneinander beabstandet sind.

2. Futtermischer nach Anspruch 1, wobei jede Aussparung zumindest eine Kante umfasst.

3. Futtermischer nach Anspruch 2, wobei die zumindest eine Kante entlang der Tiefenrichtung und/oder entlang der Breite der jeweiligen Aussparung angeordnet ist.

4. Futtermischer nach Anspruch 2 oder 3, wobei die zumindest eine Kante gratig, scharfkantig oder geriffelt ist.

5. Futtermischer nach einem der vorherigen Ansprüche, wobei die Schneiden der Mehrzahl von Segmenten und/oder die Mehrzahl von Segmenten in einer Ebene liegen.

6. Futtermischer nach einem der vorherigen Ansprüche, wobei die Schneiden der Mehrzahl von Segmenten gehärtet sind, insbesondere stärker gehärtet als der restliche Teil des wenigstens einen Schneidmessers.

7. Futtermischer nach einem der vorherigen Ansprüche, wobei die Mehrzahl von Segmenten gehärtet sind, insbesondere stärker gehärtet als der restliche Teil des wenigstens einen Schneidmessers.

8. Futtermischer nach Anspruch 6 oder 7, wobei sich die Aussparungen in den ungehärteten oder weniger gehärteten Bereich des wenigstens einen Schneidmessers erstrecken.

9. Futtermischer nach einem der vorherigen Ansprüche, wobei die Schneiden der Mehrzahl von Segmenten sich entlang einer Linie oder entlang von zueinander versetzten parallelen Linien erstrecken, und/oder
wobei jede Schneide der Mehrzahl von Segmenten einen Zacken, insbesondere zwei oder mehr als zwei Zacken, umfasst.

10. Futtermischer nach einem der vorherigen Ansprüche, wobei sich die Aussparungen im Wesentlichen in Drehrichtung der Mischschnecke oder quer zur Drehrichtung der Mischschnecke erstrecken.

11. Futtermischer nach einem der vorherigen Ansprüche, wobei die Aussparungen unterschiedlich tief und/oder breit ausgebildet sind, und/oder
wobei die Aussparungen in unterschiedlichen Winkeln zueinander und/oder zur Drehrichtung der Mischschnecke angeordnet sind.

12. Futtermischer nach einem der vorherigen Ansprüche, wobei die Mehrzahl von Segmenten unterschiedlich ausgebildet sind, insbesondere unterschiedlich breit ausgebildet sind, und/oder
wobei die Schneiden der Mehrzahl von Segmenten nachschleifbar sind.

13. Futtermischer nach einem der vorherigen Ansprüche, wobei das Messerblatt des wenigstens einen Schneidmesser derart verformt ist, dass das wenigstens eine Schneidmesser an die Mischschnecke, insbesondere an ein Schneckenblatt der Mischschnecke, derart montierbar ist, dass die Schnittebene der Mehrzahl von Segmenten im Wesentlichen senkrecht zur Drehachse der Mischschnecke liegt.

14. Futtermischer nach einem der vorherigen Ansprüche, wobei das Messerblatt des wenigstens einen Schneidmessers an der Oberseite und/oder Unterseite Versteifungen, insbesondere Einpressungen und/oder Verformungen, aufweist.

15. Schneidmesser (19) für einen Futtermischer, wobei das Schneidmesser (19) eine Mehrzahl von Segmenten (20) umfasst, wobei die Mehrzahl von Segmenten (20) jeweils eine Schneide (21) umfassen, und wobei die Segmente (20) durch Aussparungen (22) voneinander beabstandet sind.
